# EUROPÄISCHE PATENTSCHRIFT

(11) **EP 1 909 571 B1**
(45) Veröffentlichungstag und Bekanntmachung des Hinweises auf die Patenterteilung: **07.09.2016**
(21) Anmeldenummer: 06777827.4
(22) Anmeldetag: 18.07.2006
(51) Int. Cl.: A01N 37/08, A01P 15/00

(54) **VERWENDUNG VON WACHSTUMSREGULATOREN ZUR VERRINGERUNG ODER VERHINDERUNG DER KONTAMINATION VON PFLANZEN UND PFLANZENPRODUKTEN MIT TOXINEN VON TRICHOTHECEN-PRODUZIERENDEN SCHIMMELPILZEN**
USE OF GROWTH REGULATORS FOR REDUCING OR PREVENTING THE CONTAMINATION OF PLANTS AND VEGETABLE PRODUCTS BY TRICHOTHECENE-PRODUCING MOULD TOXINS
UTILISATION DE REGULATEURS DE CROISSANCE POUR REDUIRE OU EMPECHER LA CONTAMINATION DE PLANTES ET DE PRODUITS VEGETAUX PAR DES TOXINES DE MOISISSURES PRODUISANT DES TRICHOTHECENES

(30) Priorität: 19.07.2005 DE 102005033686
(43) Veröffentlichungstag der Anmeldung: 16.04.2008
(73) Patentinhaber: BASF SE, 67056 Ludwigshafen am Rhein (DE)
(72) Erfinder: RADEMACHER, Wilhelm, 67117 Limburgerhof (DE); COMPANYS, Veronica, 67117 Limburgerhof (DE); SPEAKMAN, John-Bryan, 67273 Bobenheim (DE); HERRMANN, Helmut, 72108 Rottenburg (DE); STROBEL, Dieter, 67273 Herxheim am Berg (DE); SEMAR, Martin, 76889 Gleiszellen-Gleishorbach (DE)
(86) Internationale Anmeldenummer: PCT/EP2006/064367
(87) Internationale Veröffentlichungsnummer: WO 2007/009988

(56) Entgegenhaltungen:
- EP-A- 1 568 277
- WO-A1-00/78144
- US-A- 6 022 831
- DATABASE WPI Week 199542 Derwent Publications Ltd., London, GB; AN 1995-325447 XP002403297 & JP 07 223913 A (NIPPON SODA CO) 22. August 1995 (1995-08-22)
- DATABASE CAPLUS [Online] CHEMICAL ABSTRACTS SERVICE, COLUMBUS, OHIO, US; 2000, A.K. CHOWDHURY: "Induction of resistance in chickpea plants against fusarium wilt infection by seed treatment with non-conventional chemicals" XP002403294 gefunden im STN accession no. 2000:435752 Database accession no. 133:160808 & A. K. CHOWDHURY: J. MYCOLOGY AND PLANT PATHOLOGY, Bd. 30, Nr. 1, 2000, Seiten 53-56,
- DATABASE CAB [Online] CAB INTERNATIONAL, WALLINGFORD, OXON, GB; 1999, D. I. CHANIKOV ET AL.: "Influence of chlorocholine chloride on toxicogenesis in a culture of the fungus Fusarium graminearum" XP002403295 gefunden im STN accession no. 1999:4106 Database accession no. 19981009236 & D.I.CHKANIKOV ET AL.: RUSSIAN AGRICULTURAL SCIENCES, Nr. 5, 1997, Seiten 18-20,
- M. T. FAUZI & T. C. PAULITZ: "The effect of plant growth regulators and nitrogen on Fusarium head blight of the spring wheat cultivar Max" PLANT DISEASE, Bd. 78, 1994, Seiten 289-292, XP009073769 in der Anmeldung erwähnt
- E. OLDENBURG: "Crop cultivation measures to reduce mycotoxin contamination in cereals" J. APPL. BOTANY AND FOOD QUALITY, Bd. 78, 2004, Seiten 174-177, XP009073767 in der Anmeldung erwähnt
- H. HALBWIRTH ET AL.: "Induction of antimicrobial 3-deoxyflavonoids in pome fruit trees controls fire blight" Z. NATURFORSCH., Bd. 58, Nr. c, 2003, Seiten 765-770, XP009073768 in der Anmeldung erwähnt

## Beschreibung

Die vorliegende Erfindung betrifft die Verwendung von Wachstumsregulatoren, die unter Acylcyclohexandion-Derivaten ausgewählt sind, zur Verringerung oder Verhinderung der Kontamination von Pflanzen und Pflanzenprodukten mit Mykotoxinen, die von Trichothecen-produzierenden Pilzen gebildet werden.

Das Erntegut aller Getreidearten, wie Weizen, Gerste, Roggen, Triticale, Hafer, Reis und Mais, aber auch vieler anderer Pflanzenarten, wie Kartoffel, Zuckerrübe, Tomate, Erbse, Lauch, Spargel, Futtergräser und Futterklee, kann mit Trichothecen-Toxinen und anderen Mykotoxinen, die von Trichothecen-produzierenden Schimmelpilzen stammen, kontaminiert sein. Am stärksten betroffen sind dabei Triticale, Hafer, Weichweizen und insbesondere Durum-Weizen. Quellen dieser Toxine sind dabei bestimmte Pilze, beispielsweise solche der Gattungen Trichoderma, Stachybotrys und insbesondere Fusarium, die diese Pflanzen befallen. Weltweit gelten derartige Fusariosen als wichtigste Getreidekrankheit überhaupt und betreffen vor allem die klassischen Weizenanbauregionen in den USA und in Kanada, aber auch in Australien und Europa. Der Fusarium-Pilz kommt hauptsächlich im Boden vor, wo er zusammen mit anderen Mikroorganismen Pflanzenreste zersetzt. Dabei kann er gleichermaßen auf lebendem und totem Material existieren. Ein stärkeres Auftreten als Getreidekrankheit wird durch mehrere Faktoren begünstigt:
- mit Fusarium befallene organische Substanz am Boden (als Inokulum), wobei vor allem Maisstoppeln und Maisstrohreste die Kontamination begünstigen (siehe z.B. A. Meier, B. Birzele, E. Oerke, U. Steiner, J. Krämer und H. Dehne, "Significance of different inoculum source for the Fusarium infection of wheat ears.", Mycotoxin Research 1, 2001, 71-75)
- ausreichend feuchtwarme Witterung im Frühjahr und Frühsommer, die dem Pilz die Bildung von Sporenbehältern ermöglicht
- Wechsel von Niederschlägen und Sonneneinstrahlung zur Verbreitung der Sporen
- Blühphase der Pflanze (v.a. Getreide) während des Sporenflugs (siehe z.B. A. Obst, V.H. Paul, "Krankheiten und Schädlinge des Getreides", Verlag Th. Mann, Gelsenkirchen-Buer, 1993).

Die Infektion von Getreide mit Fusarium-Pilzen führt zu einem charakteristischen Ährenbefall, bei dem einzelne Ährchen ausbleichen und manchmal ein rötlicher Sporenbelag erkennbar ist. Meist vertrocknen die Ährchen oberhalb der befallenen Stelle, und es wird dort nur ein Schmachtkorn gebildet. Unterhalb der befallenen Stelle können durchaus normal große Körner heranreifen, die aber in der Regel mit Pilztoxinen belastet sind. Fusarium-Pilze können daher nicht nur die Erträge mindern, sondern kontaminieren insbesondere das geerntete Getreide mit Mykotoxinen. Die Kontamination der Getreidekörner kann sowohl in der Ähre als auch während der Lagerung des Ernteguts erfolgen.

Nach Verzehr von kontaminierten Pflanzen und Pflanzenteilen, z.B. von Getreide oder von daraus hergestellten Produkten, können die enthaltenen Mykotoxine bereits in geringsten Dosen bei Mensch und Tier schwere akute oder chronische Krankheiten verursachen. Eine akute Gesundheitsbeeinträchtigung durch Trichothecen-Toxine und andere Mykotoxine, die von Trichothecen-produzierenden Pilzen stammen, kann sich in vielen Symptomen äußern, beispielsweise in einer Beeinträchtigung des Immunsystems, einer IgA-Nephropathie (Berger's Disease), Übelkeit, Schädigung der Nieren, bei Haustieren Futterverweigerung und Erbrechen sowie in der Geflügelzucht eine verminderte Legeleistung. Außerdem weisen diese Mykotoxine bei Mensch und Tier eine östrogene und/oder mutagene Aktivität auf. Bei Brauweizen wird ein Zusammenhang zwischen der Kontamination mit derartigen Toxinen und dem Überschäumen des Bieres vermutet (P. Gjersten, "Gushing in Beer: Its nature, cause and prevention", Brewers Digest 42, 1967, 80-84).

Um eine Gesundheitsbeeinträchtigung durch die Aufnahme der oben genannten Mykotoxine zu vermeiden, haben nationale und supranationale Behörden festgelegt, welche Maximalmengen an Mykotoxinen tolerierbar sind. So empfiehlt der Lebensmittelausschuss der EU bei Erwachsenen 0,001 mg DON (Deoxynivalenol; ein Trichothecen-Toxin) pro Kilogramm Körpergewicht als TDI (Tolerable Daily Intake). Nach der Mykotoxin-Höchstmengenverordnung in Deutschland darf in Getreidekörnern zum direkten Verzehr und in verarbeiteten Getreideerzeugnissen maximal 0,5 mg DON pro Kilogramm eingesetztes Getreide enthalten sein. In Gebäck und feinen Backwaren dürfen die DON-Gehalte 0,35 mg/kg nicht überschreiten, während in Säuglings- und Kleinkindernahrung 0,1 mg/kg die Obergrenze bilden.

Zur Verringerung des Gehalts an den vorgenannten Mykotoxinen in Pflanzen und Pflanzenteilen sowie in den daraus gewonnenen Lebensmitteln und Tierfutter werden zur Zeit im Wesentlichen folgende Maßnahmen eingesetzt:
- Anbau von Sorten mit geringer Anfälligkeit für Fusarium-Befall;
- geeignete Fruchtfolgen; insbesondere Vermeidung von Mais als Vorfrucht;
- Einsatz von Fungiziden, wie Metconazole und Tebuconazole;
- Lagerbedingungen, die einem Befall mit Fusarium-Pilzen vorbeugen.

Diese Maßnahmen sind jedoch noch nicht zufriedenstellend. Insbesondere die rein präventiv wirkenden Maßnahmen (Anbau resistenter Sorten, geeignete Fruchtfolgen und Lagerbedingungen) greifen nicht zuverlässig, vor allem wenn entsprechende Witterungsbedingungen herrschen, die den Befall mit Schimmelpilzen begünstigen. Auch der Einsatz von Fungiziden reicht nicht immer aus, insbesondere dann, wenn ein hoher Infektionsdruck vorliegt.

Wachstumsregulatoren weisen in der Regel keine fungizide Wirkung auf. Ausnahmen stellen jedoch bestimmte Verbindungen mit N-haltigem Heterocyclus dar, die eine gewisse fungizide Aktivität aufweisen, nämlich Wachstumsregulatoren vom Triazol-Typ (z.B. Paclobutrazol und Uniconazole), vom Pyrimidin-Typ (z.B. Ancymidol und Flur-primidol) und vom 4-Pyridin-Typ (z.B. Inabenfide) (W. Rademacher, "Growth retardants: Effects on gibberellin biosynthesis and other metabolic pathways", Annual Review of Plant Physiology and Plant Molecular Biology 51, 2000, 501-531).

A. Matthies, F. Walker und H. Buchenauer beschreiben in "Interference of selected fungicides, plant growth retardants as well as piperonyl butoxide and 1-aminobenzotriazole in trichothecene production of Fusarium graminearum (strain 4528) in vitro", Zeitschrift für Pflanzenkrankheiten und Pflanzenschutz (Journal of Plant Diseases & Protection) 106(2), 1999, 198-212, dass Wachstumsregulatoren (Ancymidol, Flurprimidol und BAS 111) bei in vitro Kulturen von Fusarium graminearum die Bildung von 3-Acetyldeoxynivalenol (3-ADON; ein Trichothecen-Toxin) ebenso wie das Mycelwachstum nur schwach hemmen.

Allgemein wird der Effekt derartiger Verbindungen auf den Toxingehalt von Getreidekörnern bislang als neutral bis eher negativ eingeschätzt. So beschreibt E. Oldenburg in "Crop cultivation measures to reduce mycotoxin contamination in cereals", Journal of Applied Botany and Food Quality 78, 174-177 (2004), dass die kombinierte Verwendung von Wachstumsregulatoren mit Blattfungiziden in gewissen Fällen zu einer Erhöhung des DON-Gehalts in Weizen führt und empfiehlt deshalb eine zurückhaltende Anwendung von Wachstumsregulatoren. Zu einer ähnlichen Einschätzung kommen auch M.T. Fauzi und T.C. Paulit in "The effect of plant growth regulators and nitrogen on fusarium head blight of the spring wheat cultivar Max", Plant Disease 78, 1994, 289-292: In dieser Arbeit wird berichtet, dass Chlormequatchlorid keinen unmittelbaren Einfluss auf die Anfälligkeit von Weizenähren gegenüber Befall mit Fusarium graminearum hat. Durch die Einkürzung der Pflanze kann jedoch eine Infektion leichter erfolgen, da die Ähre näher am Inokulum (Pflanzenreste im Boden) liegt. Trichothecen-Gehalte in den Körnern wurden jedoch nicht ermittelt.

Weiterhin ist bekannt, dass die Acylcyclohexandion-Verbindungen Prohexadion-Ca und Trinexapac-Ethyl bei bestimmten Pflanzenarten eine Resistenz gegen Pathogenbefall induzieren können. So beschreibt die US 6,022,831 die Verwendung von Acylcyclohexandionen gegen den Befall mit Feuerbrand (Erwinia amylovora) bei Kernobst. WO 00/78144 beschreibt die Verwendung von Acylcyclohexandionen zur Erhöhung der Widerstandskraft von Kulturpflanzen bei Befall mit bestimmten phytopathogenen Pilzen. Konkret wird nur die Wirkung gegen Schorf (Venturia inaequalis) bei Apfel sowie gegen Botrytis cinerea bei Trauben belegt. Derartige Effekte lassen sich jedoch nicht in allen Pflanzenarten und nicht gegen alle Pathogene auslösen. Der Befall von Weizen mit Mehltau lässt sich beispielsweise nicht durch eine Vorbehandlung mit Prohexadion-Ca reduzieren. Näheres wird von H. Halbwirth, T.C. Fischer, S. Roemmelt, F. Spinelli, K. Schlangen, S. Peterek, E. Sabatini, C. Messina, J.B. Speakman, C. Andreotti, W. Rademacher, C. Bazzi, G. Costa, D. Treutter, G. Forkmann und K. Stich in "Induction of antimicrobial 3-deoxyflavonoids in pome fruit trees controls fire blight", Zeitschrift für Naturforschung 58 c, 2004, 765-770 beschrieben.

WO2004/049805 A1 offenbart die Verwendung von Salzen der quartären Ammoniumverbindungen oder der Phosphorsäure und Phosphorestern um der Kontamination der Toxinen in Weizen zu verhindern.

Es besteht ein Bedarf danach, die Kontamination von Pflanzen und Pflanzenprodukten, insbesondere von solchen, die für den Verzehr durch Mensch und Tier gedacht sind, mit Trichothecen-Toxinen und anderen Toxinen, die von Trichothecen-bildenden Pilzen stammen, effektiver zu verringern oder zu verhindern. Insbesondere soll die Verringerung oder Verhinderung der Kontamination auch dann noch möglich sein, wenn bei starkem Infektionsdruck eine ausreichende Befallskontrolle durch Fungizide nicht möglich ist.

Aufgabe der vorliegenden Erfindung war es daher, Verbindungen bereitzustellen, welche zu einer Verringerung oder Verhinderung der Kontamination von Pflanzen und Pflanzenprodukten mit Toxinen, die von Trichothecen-produzierenden Pilzen gebildet werden, führen.

Überraschenderweise wurde gefunden, dass bestimmte Wachstumsregulatoren die Kontamination von Pflanzen oder Pflanzenprodukten mit solchen Toxinen verringern oder verhindern.

Die Aufgabe wurde daher gelöst durch die Verwendung von Verbindungen, die ausgewählt sind unter

### (a) Acylcyclohexandionen der Formel (I)

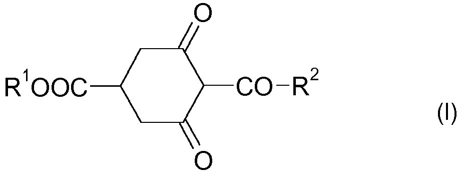

worin
- R¹: für H oder C₁-C₁₀-Alkyl steht und
- R²: für C₁-C₁₀-Alkyl oder C₃-C₁₀-Cycloalkyl steht,
oder Salzen davon; zur Verringerung oder Verhinderung der Kontamination von Pflanzen oder Pflanzenprodukten mit Toxinen, die von Trichothecen-produzierenden Pilzen gebildet werden.

Es wird angenommen, dass die genannten Wachstumsregulatoren die Biosynthese dieser Toxine hemmen. Möglich ist aber auch, dass sie außerdem oder stattdessen die Resistenz der Pflanzen gegen Pathogenbefall induzieren oder erhöhen.

Die nachfolgenden Angaben zu geeigneten und bevorzugten Ausführungsformen der Verbindungen I und ihrer Anwendung gelten sowohl allein für sich genommen als auch in Kombination miteinander.

Im Rahmen der vorliegenden Erfindung steht C₁-C₁₀-Alkyl für einen linearen oder verzweigten Alkylrest, wie Methyl, Ethyl, Propyl, Isopropyl, n-Butyl, sec-Butyl, Isobutyl, tert-Butyl, Pentyl, Neopentyl, Hexyl, Heptyl, Octyl, 2-Ethylhexyl, Nonyl oder Decyl. C₁-C₄-Alkyl steht beispielsweise für Methyl, Ethyl, Propyl, Isopropyl, n-Butyl, sec-Butyl, Isobutyl oder tert-Butyl. Vorzugsweise ist der Alkylrest linear.

C₃-C₁₀-Cycloalkyl steht beispielsweise für Cyclopropyl, Cyclopentyl, Cyclohexyl, Cycloheptyl, Cyclooctyl, Cyclodecyl oder Decalin. C₃-C₆-Cycloalkyl steht beispielsweise für Cyclopropyl, Cyclopentyl oder Cyclohexyl.

Bei den Toxinen, die von Trichothecen-produzierenden Pilzen gebildet werden, handelt es sich sowohl um Trichothecene als auch um davon verschiedene Toxine, die von denselben Schimmelpilzen stammen.

Bei den Trichothecen-produzierenden Pilzen handelt es sich vorzugsweise um solche der Gattungen Trichoderma, Stachybotrys und insbesondere Fusarium.

Von Bedeutung sind im Zusammenhang mit der Mykotoxinproduktion bei der Gattung Fusarium beispielsweise: *F. culmorum* und *F. graminearum* als wichtigste Arten (Mauler-Machnik A. & Suty A, 2000: Aktueller Stand der internationalen Forschung zur Bekämpfung von Ährenfusariosen in Weizen. 22. Mykotoxin-Workshop, Bonn, 5.-7. Juni 2000), des Weiteren aber *auch F. acuminatum, F. avenaceum, F. crockwellense, F. equiseti, F. moniliforme, F. oxysporum, F. poae, F. proliferans, F. scirpi, F. sporotrichioides, F. subglutlnans* und *F. tricinctum*.

Bei der Gattung Trichoderma ist insbesondere der Vertreter *Trichoderma viride* in diesem Zusammenhang von Bedeutung. Bei den Schimmelpilzen der Gattung Stachybotrys handelt es sich insbesondere um *Stachybotrys chartarum*.

Bei den Mykotoxinen handelt es sich insbesondere um Trichothecene oder Zearalenon.

Zearalenon ist ein östrogen wirkendes Mykotoxin, das von verschiedenen Arten der Gattung Fusarium gebildet wird. Bevorzugte Substrate der Zearalenon bildenden Pilze sind Mais und Hafer. Es können aber auch andere Getreidearten stark befallen werden. Da Zearalenon in einer sehr späten Entwicklungsphase des Pilzes gebildet wird, ist es vor allem in stark befallenem Getreide zu finden. Zearalenon ist nicht akut toxisch, man vermutet jedoch eine karzinogene Wirkung. Bei Weidetieren bewirkt es Fertilitätsstörungen, Früh- und Totgeburten.

Als Trichothecene werden eine Gruppe von ca. 100 Mykotoxinen bezeichnet, die insbesondere von Fusarien, aber auch von anderen Schimmelpilzen auf Pflanzen und Pflanzenprodukten, insbesondere auf Getreide und Getreideprodukten gebildet werden. Trichothecene besitzen ein breites Spektrum biologischer Wirkungen. Generell hemmen Trichothecene die Proteinbiosynthese in Säugetierzellen, zum Teil schon ab Konzentrationen von 1 ng. Vergiftungen mit Trichothecenen führen zu Erbrechen, Durchfall, Nahrungsverweigerung, Entzündungen des Magen-Darm-Traktes, Beeinträchtigung von Nervenzellen, Herzmuskel, Lymphsystem, Testes, Thymus und Bildung von Gewebsnekrosen. Vergiftungen von Tieren und Menschen sind beispielsweise unter der Bezeichnung "moldy-corn-toxicose" (USA), "bean-hull-toxicose" (Japan) oder "alimentary toxic aleukia" (GUS) bekannt. Nach ihrer chemischen Struktur werden die Trichothecene in die Gruppen A bis D unterteilt.

Von Bedeutung sind insbesondere folgende Trichothecen-Toxine: T-2 Toxin, HT-2 Toxin, Neosolaniol, Monoacetoxyscirpenol, Diacetoxyscirpenol (DAS), 15-Acetoxyscirpendiol, Deoxynivalenol (DON = Vomitoxin), Nivalenol, 3-Acetoxynivalenol, 15-Acetoxynivalenol, Fusarenon, T-2 Tetraol und Verrucarol.

Pflanzen, bei denen die Bildung der genannten Mykotoxine verringert oder verhindert werden soll, sind vorzugsweise ausgewählt unter Getreide, Kartoffel, Zuckerrübe, Tomate, Erbse, Lauch, Spargel, Futtergräser und Futterklee. Bei Getreide handelt es sich beispielsweise um Weizen, Reis, Mais, Gerste, Hafer, Triticale und Roggen.

Bei den Pflanzenprodukten handelt es sich insbesondere um das Erntegut dieser Pflanzen, beispielsweise um Getreidekörner bzw. beim Mais auch um den Maiskolben, Kartoffeln, Zuckerrüben, Tomaten, Erbsen, Lauch, Spargel und geschnittene Futtergräser und Futterklee, beispielsweise Heu.

Besonders bevorzugt sind die Pflanzen ausgewählt unter Weizen, wie Durum-Weizen oder Weichweizen, Gerste, Roggen, Triticale, Hafer, Reis und Mais.

Besonders bevorzugt handelt es sich bei den Pflanzenprodukten um das Erntegut aus diesen Pflanzen, wie Getreidekörner.

Insbesondere werden die Wachstumsregulatoren (I) zur Verringerung oder Verhinderung der Kontamination von Weizen mit den zuvor genannten Mykotoxinen eingesetzt.

In einer bevorzugte Ausführungsform werden die Verbindungen (I) zur Verringerung oder Verhinderung der Kontamination von Pflanzen und Pflanzenprodukten mit Toxinen, die ausgewählt sind unter Deoxynivalenol (DON), Nivalenol (NIV) und Zearalenon (ZEA) eingesetzt.

Die Verbindungen der Formeln (I) sind bekannt und werden in der Regel als Wachstumsregulatoren (growth retardants) in der Landwirtschaft eingesetzt (siehe z.B. EP-A-123001, EP-A-126713, W. Rademacher, "Growth Retardants: Effects on Gibberellin Biosynthesis and Other Metabolic Pathways", Annu. Rev. Plant. Mol. Biol. 2000, 51, 501-531).

Die Verbindungen der Formel (I) können sowohl in der Trionform (Triketo-Form) I.a als auch in den tautomeren Keto-Enol-Formen I.b bzw. I.c vorliegen:

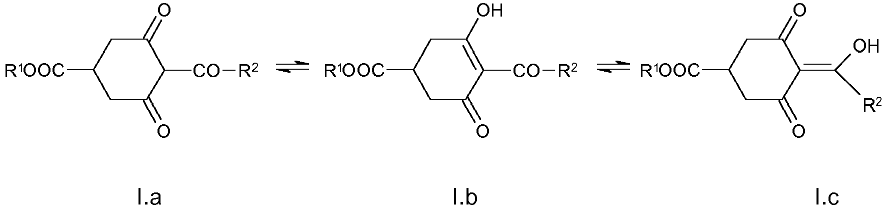

In den Verbindungen der Formel I steht R¹ vorzugsweise für H oder C₁-C₄-Alkyl.

R² steht vorzugsweise für C₁-C₄-Alkyl oder C₃-C₆-Cycloalkyl und insbesondere für Ethyl oder Cyclopropyl.

Bei den Salzen der Acylcyclohexandionverbindungen I mit R¹ ≠ H handelt es sich um die Salze von Monoanionen, während es sich im Falle von R¹ = H sowohl um die Salze der Mono- als auch der Dianionen dieser Verbindungen handeln kann. Die Monoanionen können sowohl als Carboxylatanionen I.d als auch als Enolatanionen I.e bzw. I.f vorliegen:

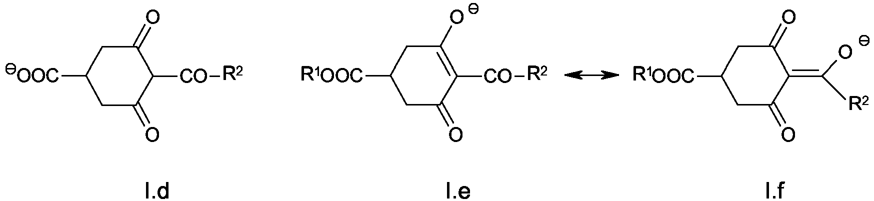

Im Dianion liegen entsprechend die Carboxylat- und die Enolat-Gruppen nebeneinander vor.

Bevorzugte Kationen in den Salzen der Verbindungen der Formel I sind die Ionen der Alkalimetalle, vorzugsweise des Lithiums, Natriums und Kaliums, der Erdalkalimetalle, vorzugsweise des Calciums und Magnesiums, und der Übergangsmetalle, vorzugsweise des Mangans, Kupfers, Zinks und Eisens, weiterhin Ammonium (NH₄⁺) und substituiertes Ammonium, worin ein bis vier Wasserstoffatome durch C₁-C₄-Alkyl, Hydroxy-C₁-C₄-alkyl, C₁-C₄-Alkoxy-C₁-C₄-alkyl, Hydroxy-C₁-C₄-alkoxy-C₁-C₄-alkyl, Phenyl oder Benzyl ersetzt sind, vorzugsweise Ammonium, Methylammonium, Isopropylammonium, Dimethylammonium, Diisopropylammonium, Trimethylammonium, Tetramethylammonium, Tetraethylammonium, Tetrabutylammonium, 2-Hydroxyethylammonium, 2-(2-Hydroxyeth-1-oxy)eth-1-ylammonium, Di(2-hydroxyeth-1-yl)ammonium, Benzyltrimethylammonium, Benzyltriethylammonium, des weiteren Phosphoniumionen, Sulfoniumionen, vorzugsweise Tri(C₁-C₄-alkyl)sulfonium wie Trimethylsulfonium und Sulfoxoniumionen, vorzugsweise Tri(C₁-C₄-alkyl)sulfoxonium. Bevorzugte Kationen sind außerdem Chlormequat [(2-Chlorethyl)trimethylammonium], Mepiquat (N,N-Dimethylpiperidinium) und N,N-Dimethylmorpholinium. Besonders bevorzugte Kationen sind die Alkalimetallkationen, die Erdalkalimetallkationen und das Ammoniumkation (NH₄⁺). Insbesondere handelt es sich um das Calciumsalz.

Im Rahmen der vorliegenden Erfindung bezieht sich die Bezeichnung "Verbindungen der Formel I", "Acylcyclohexandione der Formel I" bzw. "Wachstumsregulatoren der Formel I" sowohl auf die neutralen Verbindungen I als auch auf deren Salze.

Besonders bevorzugt erfindungsgemäß verwendete Verbindungen I sind Prohexadion (R¹ = H, R² = Ethyl), Prohexadion-Calcium (Calcium-Salz von Prohexadion), Trinexapac (R¹ = H, R² = Cyclopropyl) und Trinexapac-Ethyl (R¹ = Ethyl, R² = Cyclopropyl).

Unter den Acylcyclohexandionen (I) besonders bevorzugt sind Prohexadion, Prohexadion-Calcium, Trinexapac und Trinexapac-Ethyl. Insbesondere verwendet man Prohexadion-Calcium.

Die Verwendung von Verbindungen der Formeln (I) zur Verringerung oder Verhinderung der Kontamination mit den zuvor genannten Mykotoxinen erfolgt allgemein in der Weise, dass die Pflanzen oder Pflanzenteile davon bzw. die Pflanzenprodukte mit diesen Verbindungen behandelt werden. Die Behandlung der Pflanzen bzw. der Pflanzenprodukte erfolgt vorzugsweise so, dass die Pflanze oder Pflanzenteile davon bzw. das Pflanzenprodukt mit wenigstens einer Verbindung, die ausgewählt ist unter Verbindungen der Formeln (I), in Kontakt gebracht wird. Hierfür wird wenigstens eine der Verbindungen (I) auf die Pflanze oder auf Pflanzenteile davon bzw. auf das Pflanzenprodukt appliziert. Werden mehrere Verbindungen der Formeln (I) eingesetzt, so können sie im Gemisch oder getrennt appliziert werden. Bei der getrennten Anwendung kann die Applikation der einzelnen Wirksubstanzen gleichzeitig oder - innerhalb einer Behandlungsfolge - gestaffelt nacheinander erfolgen, wobei sie bei der sukzessiven Applikation vorzugsweise in einem zeitlichen Abstand von wenigen Stunden bis mehreren Wochen erfolgt.

Die Behandlung der Pflanzen oder Pflanzenteile bzw. der Pflanzenprodukte kann sowohl prophylaktisch als auch therapeutisch, d.h. nach einer erfolgten Infektion mit Schadpilzen, erfolgen. Vorzugsweise erfolgt sie jedoch prophylaktisch, d.h. vor dem Befall durch die entsprechenden Schadpilzarten.

Die Anwendungstermine, die Anzahl der Applikationen und die speziell eingesetzten Aufwandmengen sind dabei an die jeweiligen Bedingungen anzupassen und müssen im Einzelfall vom Fachmann festgelegt werden. Neben den jeweils verwendeten Wirkstoffen muss dabei insbesondere unterschieden werden, ob eine Behandlung auf intakte Pflanzen unter Feldbedingungen erfolgt oder ob Erntegut im Lager vor Toxin-Kontamination geschützt werden soll.

Die Wirkstoffe können als solche oder in Form ihrer Formulierungen bzw. in Form der daraus bereiteten Anwendungsformen durch Versprühen, Vernebeln, Verstäuben, Verstreuen oder Gießen angewendet werden. Die Anwendungsformen richten sich ganz nach den Verwendungszwecken, v.a. nach der Pflanzenart und -sorte bzw. nach dem Pflanzenteil oder Pflanzenprodukt, auf den appliziert werden soll; sie sollten in jedem Fall möglichst die feinste Verteilung der erfindungsgemäß eingesetzten Wirkstoffe und auch der Hilfsstoffe gewährleisten.

Die genannten Verbindungen der Formeln I werden typischerweise als Formulierungen eingesetzt, wie sie im Bereich des Pflanzen- und Vorratsschutzes üblich sind.

Übliche Formulierungen sind beispielsweise Lösungen, Emulsionen, Suspensionen, Dispersionen, Pasten, Stäubmittel, Streumittel, Pulver und Granulate.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im Wesentlichen in Betracht:
- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden.
- Trägerstoffe wie natürliche Gesteinsmehle (z.B. Kaoline, Tonerden, Talkum, Kreide) und synthetische Gesteinsmehle (z.B. hochdisperse Kieselsäure, Silikate).
- Oberflächenaktive Stoffe, wie Alkali-, Erdalkali-, Ammoniumsalze von aromatischen Sulfonsäuren, z.B. Ligninsulfonsäure, Phenolsulfonsäure, Naphthalinsulfonsäure und Dibutylnaphthalinsulfonsäure, sowie von Fettsäuren, Alkylarylsulfonate, Alkylsulfate, Alkylsulfonate, Fettalkoholsulfate, Fettsäuren und sulfatierte Fettalkoholglykolether, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol oder Nonylphenol, Alkylphenolpolyglykolether, Tributylphenylpolyglykolether, Tristerylphenylpolyglykolether, Alkylarylpolyetheralkohole, Isotridecylalkohol, Alkohol- und Fettalkoholethylenoxid-Kondensate, ethoxyliertes Rizinusöl, Polyoxyethylen- oder Polyoxypropylenalkylether, ethoxyliertes Polyoxypropylen, Laurylalkoholpolyglykoletheracetat, Sorbitester, Ligninsulfitablaugen, Methylcellulose oder Siloxane. Geeignete Siloxane sind beispielsweise Polyetherpolymethylsiloxan-Copolymere, die auch als "Spreader" oder "Penetratoren" bezeichnet werden.

Als inerte Formulierungshilfsmittel, insbesondere zur Herstellung von direkt versprühbaren Lösungen, Emulsionen, Pasten oder Öldispersionen, kommen im Wesentlichen in Betracht: Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylole, Paraffine, Tetrahydronaphthalin, alkylierte Naphthaline oder deren Derivate, Alkohole, wie Methanol, Ethanol, Propanol, Butanol und Cyclohexanol, Ketone wie Cyclohexanon und Isophoron, stark polare Lösungsmittel, z.B. Dimethylsulfoxid, N-Methylpyrrolidon oder Wasser.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden.

Feste Trägerstoffe sind z.B. Mineralerden, wie Kieselgele, Silikate, Talkum, Kaolin, Attaclay, Kalkstein, Kalk, Kreide, Bolus, Löss, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im Allgemeinen die Verbindungen (I) in einer Gesamtmenge von 0,01 bis 95 Gew.-%, vorzugsweise von 0,1 bis 90 Gew.-%, bezogen auf das Gesamtgewicht der Formulierung.

Produkte (Formulierungen) zur Verdünnung in Wasser sind beispielsweise wasserlösliche Konzentrate (SL), dispergierbare Konzentrate (DC), emulgierbare Konzentrate (EC), Emulsionen (EW, EO), Suspensionen (SC, OD), wasserdispergierbare und wasserlösliche Granulate (WG, SG) sowie wasserdispergierbare und wasserlösliche Pulver (WP, SP). Produkte (Formulierungen) für die Direktapplikation sind beispielsweise Stäube (DP), Granulate (GR, FG, GG, MG) und ULV- Lösungen (UL).

Wässrige Anwendungsformen können aus Lagerformulierungen, wie konzentrierten Lösungen, Emulsionskonzentraten, Suspensionen, Pasten, netzbaren Pulvern (Spritzpulver, Öldispersionen) oder wasserdispergierbaren Granulaten, durch Zusatz von Wasser bereitet werden und beispielsweise durch Versprühen appliziert werden.

Zur Herstellung von Emulsionen, Pasten oder Öldispersionen können die Verbindungen der Formeln (I) als solche oder in einem Öl oder Lösungsmittel gelöst und mittels Netz-, Haft-, Dispergier- oder Emulgiermittel in Wasser homogenisiert werden. Es können aber auch aus der Wirksubstanz Netz-, Haft-, Dispergier- oder Emulgiermittel und eventuell Lösungsmittel oder Öl bestehende Konzentrate hergestellt werden, die zur Verdünnung mit Wasser geeignet sind. Es versteht sich von selbst, dass die Anwendungsformen die in den Lagerformulierungen verwendeten Hilfsstoffe enthalten.

Die Wirkstoffkonzentrationen in mit Wasser verdünnten Zubereitungen können in größeren Bereichen variiert werden. Im Allgemeinen liegen sie zwischen 0,0001 und 10 Gew.-%, vorzugsweise zwischen 0,01 und 1 Gew.-%.

Den Wirkstoffen können Öle verschiedenen Typs, Netzmittel, Adjuvants, Fungizide, Insektizide, Bakterizide, andere Wachstumsregulatoren oder auch Düngemittel gegebenenfalls auch erst unmittelbar vor der Anwendung (Tankmix), zugesetzt werden. Diese Mittel können zu den erfindungsgemäßen Mitteln im Gewichtsverhältnis 1:100 bis 100:1, bevorzugt 1:10 bis 10:1 zugemischt werden.

Als Adjuvants in diesem Sinne kommen insbesondere in Frage: organisch modifizierte Polysiloxane, z.B. Break Thru S 240^{®}; Alkoholalkoxylate, z. B. Atplus 245^{®}, Atplus MBA 1303^{®}, Plurafac LF 300^{®} und Lutensol ON 30^{®}; EO-PO-Blockpolymerisate, z. B. Pluronic RPE 2035^{®} und Genapol B^{®}; Alkoholethoxylate, z. B. Lutensol XP 80^{®}; und Natriumdioctylsulfosuccinat, z. B. Leophen RA^{®}.

Die kombinierte Verwendung der Verbindungen (I) mit weiteren im Pflanzenschutz üblichen Wirkstoffen, z.B. mit Fungiziden, kann sowohl dadurch erfolgen, dass man ein Gemisch dieser Wirkstoffe einsetzt (z.B. eine gemeinsame Formulierung oder ein Tankmix) als auch durch die sukzessive Applikation der einzelnen Wirkstoffe.

Geeignet ist insbesondere die Verwendung der Verbindungen (I) in Kombination mit wenigstens einem Fungizid.

Die folgende Liste von Fungiziden, mit denen die erfindungsgemäß zum Einsatz kommenden Verbindungen (I) gemeinsam angewendet werden können, soll die Kombinationsmöglichkeiten erläutern, nicht aber einschränken:
- Acylalanine wie Benalaxyl, Metalaxyl, Ofurace, Oxadixyl,
- Aminderivate wie Aldimorph, Dodine, Dodemorph, Fenpropimorph, Fenpropidin, Guazatine, Iminoctadine, Spiroxamin, Tridemorph
- Anilinopyrimidine wie Pyrimethanil, Mepanipyrim oder Cyprodinil,
- Antibiotika wie Cycloheximid, Griseofulvin, Kasugamycin, Natamycin, Polyoxin oder Streptomycin,
- Azole wie Bitertanol, Bromoconazol, Cyproconazol, Difenoconazol, Dinitroconazol, Epoxiconazol, Fenbuconazol, Fluquiconazol, Flusilazol, Hexaconazol, Imazalil, Metconazol, Myclobutanil, Penconazol, Propiconazol, Prochloraz, Prothioconazol, Tebuconazol, Triadimefon, Triadimenol, Triflumizol, Triticonazol,
- Dicarboximide wie Iprodion, Myclozolin, Procymidon, Vinclozolin,
- Dithiocarbamate wie Ferbam, Nabam, Maneb, Mancozeb, Metam, Metiram, Propineb, Polycarbamat, Thiram, Ziram, Zineb,
- Heterocylische Verbindungen wie Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine,
- Kupferfungizide wie Bordeaux Brühe, Kupferacetat, Kupferoxychlorid, basisches Kupfersulfat,
- Nitrophenylderivate, wie Binapacryl, Dinocap, Dinobuton, Nitrophthal-isopropyl
- Phenylpyrrole wie Fenpiclonil oder Fludioxonil,
- Schwefel
- Sonstige Fungizide wie Acibenzolar-S-methyl, Benthiavalicarb, Carpropamid, Chlorothalonil, Cyflufenamid, Cymoxanil, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminium, Iprovalicarb, Hexachlorbenzol, Metrafenon, Pencycuron, Propamocarb, Phthalid, Toloclofosmethyl, Quintozene, Zoxamid
- Strobilurine wie Azoxystrobin, Dimoxystrobin, Fluoxastrobin, Kresoxim-methyl, Metominostrobin, Orysastrobin, Picoxystrobin, Pyraclostrobin oder Trifloxystrobin,
- Sulfensäurederivate wie Captafol, Captan, Dichlofluanid, Folpet, Tolylfluanid
- Zimtsäureamide und Analoge wie Dimethomorph, Flumetover oder Flumorph.

Bevorzugt sind die Fungizide auswählt unter Metconazol, Tebuconazol, Prothioconazol, Epoxiconazol, Fenpropimorph, Dimoxystrobin und Kresoxim-methyl. Besonders bevorzugt sind die Fungizide auswählt unter Metconazol, Tebuconazol und Prothioconazol.

In einer bevorzugten Ausführungsform für Feldapplikationen, d.h. Applikation auf lebende Pflanzen oder Pflanzenteile davon, verwendet man die Verbindungen der Formeln (I) in Form einer wässrigen Spritzbrühe. Die Applikation erfolgt vorzugsweise durch Spritzen. Dabei wird entweder auf den gesamten oberirdischen Pflanzenteil oder aber nur auf einzelne Pflanzenteile, wie Blüten, Früchte, Blätter oder einzelne Triebe, appliziert. Die Wahl der einzelnen Pflanzenteile, auf die appliziert werden soll, hängt von der Pflanzenart und ihrem Entwicklungsstadium ab. Bevorzugt wird auf den gesamten oberirdischen Pflanzenteil oder aber auf die Teile appliziert, die besonders vor Toxin-Kontamination geschützt werden sollen bzw. die bevorzugt von Trichothecen-bildenden Pilzen befallen werden.

Allgemein werden die Verbindungen der Formeln (I) bei der Feldapplikation in einer Gesamtmenge von 5 bis 3000 g/ha, vorzugsweise 50 bis 1000 g/ha und besonders bevorzugt 100 bis 500 g/ha pro Saison eingesetzt.

Im Einzelnen ist es unter Feldbedingungen bevorzugt, pro Saison folgende Mengen an Aktivsubstanz zu applizieren:
- Acylcyclohexandione (I) (z.B. Trinexapac-Ethyl oder Prohexadion-Ca):
   vorzugsweise 5 bis 1000 g; besonders bevorzugt 25 bis 500 g; insbesondere 50 bis 200 g; speziell bei Reis: insbesondere: 10 bis 50 g.

Pro Saison werden die Verbindungen (I) vorzugsweise 1 bis 5 mal, besonders bevorzugt 1 bis 3 mal und insbesondere 1 bis 2 mal appliziert.

In einer bevorzugten Ausführungsform für gelagertes Erntegut (z.B. Getreide in einem Silo) verwendet man die Verbindungen der Formeln (I) in Form von Stäubemitteln.

Allgemein werden die Verbindungen der Formeln (I) bei der Applikation bei gelagertem Erntegut in einer Gesamtmenge von 0,1 bis 700 g, vorzugsweise 0,5 bis 120 g und besonders bevorzugt 1 bis 60 g pro Tonne Erntegut eingesetzt.

Im Einzelnen ist es bevorzugt, pro Tonne gelagertes Erntegut folgende Mengen an Aktivsubstanz gleichmäßig verteilt einzusetzen:
- Acylcyclohexandione (I) (z.B. Trinexapac-Ethyl oder Prohexadion-Ca):
   vorzugsweise 0,1 bis 500 g; besonders bevorzugt 0,5 bis 100 g; insbesondere 1 bis 50 g.

Ein weiterer Gegenstand der vorliegenden Erfindung ist ein Verfahren zur Verringerung oder Verhinderung der Kontamination von Pflanzen und Pflanzenprodukten mit Toxinen, die von Trichothecen-produzierenden Pilzen gebildet werden, bei dem man eine Pflanze, ein Pflanzenteil oder ein Pflanzenprodukt mit wenigstens einer Verbindung, die ausgewählt ist unter Acylcyclohexandionen der Formel (I) oder Salzen davon in Kontakt bringt.

Bezüglich bevorzugter Verbindungen der Formel (I) sowie der Menge und Art, wie diese eingesetzt werden, wird auf das Vorstehende verwiesen.

Durch die Verwendung von Wachstumsregulatoren der Formel (I) wird die Bildung von Trichothecen-Toxinen und anderen Mykotoxinen, die von Trichothecen-produzierenden Schadpilzen stammen, deutlich verringert. Diese Verringerung beruht nicht auf einer fungiziden Wirkung der eingesetzten Wachstumsregulatoren, die zu einem Absterben des Toxin-produzierenden Schadpilzes führen würde, sondern insbesondere auf der Hemmung der Biosynthese von Trichothecenen und anderen Mykotoxinen in diesen Schadpilzen. Dadurch kann die Kontamination mit Mykotoxinen von Pflanzen und Pflanzenprodukten auch in solchen Fällen unterdrückt werden, in denen die Schadpilze auf eingesetzte Fungizide nicht oder nicht ausreichend reagieren.

Die nachfolgenden Beispiele sollen die Erfindung veranschaulichen, ohne sie jedoch einzuschränken.

### Beispiele

### 1. Verminderung der Kontamination von Weizenkörnern mit Deoxynivalenol (DON) nach Behandlung mit Prohexadion-Ca unter Feldbedingungen

Winterweizen der Sorte "Ritmo" wurde 2004 unter üblichen Bedingungen am Standort Tachenhausen (Baden-Württemberg) angebaut. Im Mai bzw. Juni (exakte Termine siehe Tabelle 1) wurde das Getreide mit zwei verschiedenen Fungizidgemischen allein bzw. in Kombination mit Prohexadion-Ca (eingesetzt in Form des kommerziell erhältlichen Produkts REGALIS) durch Spritzen mit etwa 300 l/ha behandelt. Bedingt durch günstige Infektionsbedingungen erfolgte ein relativ intensiver natürlicher Befall der Ähren mit Fusarium-Pilzen. Am 12. Juli 2004 wurde der Befall der Ähren mit Fusarium-Pilzen ermittelt. Die Ernte der Weizenkörner erfolgte am 3. August 2004. Der DON-Gehalt der Körner wurde nach Extraktion und Analyse mittels HPLC/MS festgestellt. Zur vergleichenden Auswertung wurden der beim unbehandelten Weizen festgestellte Fusarium-Befall, der DON-Wert und der Kornertrag als 100 % definiert. Die beim behandelten Weizen festgestellten Werte sind in Tabelle 1 als relative Werte, d.h. als prozentualer Anteil, bezogen auf diese 100 %, ausgedrückt.

**Tabelle 1**

| Bsp | Behandlung | | | Befall¹ [%] | DON-Gehalt² der Körner [%] | Kornertrag³ [%] |
|---|---|---|---|---|---|---|
| | Wirkstoff | Aufwandmenge [g/ha] | Termin 2004 | | | |
| 1 | - | - | - | 100 | 100 | 100 |
| 24 | Kresoxim-methyl | 100 | 13.5. | 96 | 79 | 111 |
| | + Epoxiconazol | 100 | 13.5. | | | |
| | + Fenpropimorph | 100 | 13.5. | | | |
| 3⁴ | Kresoxim-methyl | 100 | 13.5. | 88 | 31 | 114 |
| | + Epoxiconazol | 100 | 13.5. | | | |
| | + Fenpropimorph | 100 | 13.5. | | | |
| | Prohexadion-Ca | 50 | 01.6. | | | |
| 45 | Kresoxim-methyl | 100 | 13.5. | 13 | 12 | 124 |
| | + Epoxiconazol | 100 | 13.5. | | | |
| | + Fenpropimorph | 100 | 13.5. | | | |
| | Dimoxystrobin | 200 | 07.6. | | | |
| | + Epoxiconazol | 75 | 07.6. | | | |
| | Metconazol | 60 | 07.6. | | | |
| 55 | Kresoxim-methyl | 100 | 13.5. | 12 | 5 | 125 |
| | + Epoxiconazol | 100 | 13.5. | | | |
| | + Fenpropimorph | 100 | 13.5. | | | |
| | Dimoxystrobin | 200 | 07.6. | | | |
| | + Epoxiconazol | 75 | 07.6. | | | |
| | Metconazol | 60 | 07.6. | | | |
| | Prohexadion-Ca | 50 | 07.6. | | | |

| | | | | | | |
|---|---|---|---|---|---|---|
| ¹ 100% = 27,3% der Ähren sind von Fusarium-Pilzen befallen ² 100% = 14,1 mg DON pro kg geernteter Körner ³ 100% = 11,2 t/ha ⁴ Handelsname des eingesetzten Fungizidgemischs: Juwel Top (Kresoxim-methyl, Epoxiconazol, Fenpropimorph) ⁵ Handelsname der eingesetzten Fungizidgemische: Juwel Top, Swing Gold (Dimoxystrobin, Epoxiconazol) und Caramba (Metconazol) | | | | | | |

Wie der Vergleich der Beispiele 2 und 3 bzw. 4 und 5 zeigt, führt die Verwendung von Prohexadion-Ca zu einer Verringerung des DON-Gehalts der geernteten Weizenkörner. Das heißt, die zusätzliche Verwendung von Prohexadion-Ca zu den jeweils eingesetzten Fungiziden führt bei einem vergleichbaren Fusarium-Befall zu einer geringeren Kontamination der Körner mit DON im Vergleich zur Behandlung mit den jeweiligen Fungiziden alleine.

### 2. Verminderung der Kontamination von Weizenkörnern mit Deoxynivalenol (DON) und Nivalenol (NIV) nach Behandlung mit Prohexadion-Ca unter Feldbedingungen

Winterweizen der Sorte "Ritmo" wurde 2004 unter üblichen Bedingungen am Standort Gronau (Rheinland-Pfalz) angebaut. Das Getreide wurde am 7. Juni 2004 zum Blühbeginn mit Prohexadion-Ca (appliziert als REGALIS) behandelt. Bedingt durch günstige Infektionsbedingungen erfolgte ein relativ intensiver natürlicher Befall der Ähren mit Fusarium-Pilzen. Am 28. Juni 2004 wurde der Befall der Ähren mit Fusarium-Pilzen ermittelt. Die Ernte der Weizenkörner erfolgte am 9. August 2004. Der DON-Gehalt und der NIV-Gehalt der Körner wurden nach Extraktion mittels HPLC/MS festgestellt. Die Auswertung erfolgte analog zu Beispiel 1.

**Tabelle 2**

| Bsp | Behandlung | | Befall¹ | Gehalt der Körner an | | Kornertrag⁴ [%] |
|---|---|---|---|---|---|---|
| | Wirkstoff | Aufwandmenge [g/ha] | | DON² [%] | NIV³ [%] | |
| 6 | - | - | 100 | 100 | 100 | 100 |
| 7 | Prohexadion-Ca | 50 | 91 | 81 | 75 | 109 |

| | | | | | | |
|---|---|---|---|---|---|---|
| ¹ 100% = 43,8% der Ähren sind von Fusarium-Pilzen befallen ² 100% = 22,4 mg DON pro kg geernteter Körner ³ 100% = 0,45 mg NIV pro kg geernteter Körner ⁴ 100% = 2,9 t/ha | | | | | | |

Die Ergebnisse zeigen, dass durch den Wirkstoff Prohexadion-Ca der Gehalt an DON und NIV deutlich reduziert wird. Dieser Effekt ist weitgehend unabhängig vom Befall der Ähren mit Fusarium-Pilzen.

### 3. Verminderung der Kontamination von Weizenkörnern mit Deoxynivalenol (DON) und Zearalenon (ZEA) nach Behandlung mit Prohexadion-Ca unter Feldbedingungen

Winterweizen der Sorte "Slade" wurde 2004 unter üblichen Bedingungen am Standort Ulhówek (Polen) angebaut. Das Getreide wurde am 10. Juni 2004 bzw. 19. Juni 2004 zum Blühbeginn entweder mit Prohexadion-Ca (appliziert als REGALIS) oder mit dem Fungizid Metconazol (appliziert als kommerziell erhältliches Produkt "Caramba") behandelt. Unter den gegebenen Anbaubedingungen erfolgte ein relativ leichter natürlicher Befall der Ähren mit Fusarium-Pilzen. Am 22. Juli 2004 wurde der Befall der Ähren mit Fusarium-Pilzen ermittelt. Die Ernte der Weizenkörner erfolgte am 16. August 2004. Der DON-Gehalt und der ZEA-Gehalt der Körner wurden nach Extraktion mittels HPLC/MS festgestellt. Die Auswertung erfolgte analog zu Beispiel 1.

**Tabelle 3**

| Bsp | Behandlung | | | Befall¹ | ZEA²-Gehalt der Körner [%] | Kornertrag³ [%] |
|---|---|---|---|---|---|---|
| | Wirkstoff | Dosis | Termin | | | |
| 8 | - | - | | 100 | 100 | 100 |
| 9 | Prohexadion-Ca | 50 | 10.6. | 78 | 23 | 98 |
| 10 | Metconazol | 90 | 10.6. | 18 | 53 | 108 |
| 11 | Prohexadion-Ca | 50 | 19.6. | 51 | 32 | 105 |
| 12 | Metconazol | 90 | 19.6. | 18 | 33 | 110 |

| | | | | | | |
|---|---|---|---|---|---|---|
| ¹ 100% = 4,5% der Ähren sind von Fusarium-Pilzen befallen ² 100% = 0,073 mg NIV pro kg geernteter Körner ³ 100% = 8,6 t/ha | | | | | | |

Der Versuch belegt, dass durch den Wirkstoff Prohexadion-Ca die Gehalte an DON und ZEA deutlich reduziert werden. Der Effekt des Fungizids Metconazol wird in diesem Versuch nahezu erreicht, obwohl dieses einen deutlich intensiveren Effekt auf den Pilzbefall ausübt.

## Patentansprüche

1. Verwendung von Verbindungen, die ausgewählt sind unter
(a) Acylcyclohexandionen der Formel (I) 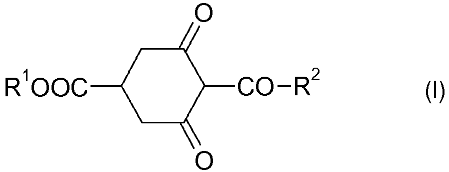 worin
R¹ für H oder C₁-C₁₀-Alkyl steht und
R² für C₁-C₁₀-Alkyl oder C₃-C₁₀-Cycloalkyl steht,
oder Salzen davon;
zur Verringerung oder Verhinderung der Kontamination von Pflanzen oder Pflanzenprodukten mit Toxinen, die von Trichothecen-produzierenden Pilzen gebildet werden.

2. Verwendung nach Anspruch 1, wobei es sich bei den Trichothecen-produzierenden Pilzen um solche der Gattungen Fusarium, Trichoderma oder Stachybotrys handelt.

3. Verwendung nach einem der vorhergehenden Ansprüche, wobei es sich bei den Toxinen um Trichothecene oder Zearalenon handelt.

4. Verwendung nach Anspruch 3, wobei die Trichothecene ausgewählt sind unter Deoxynivalenol, Nivalenol, 3- und 15-Acetoxynivalenol, T-2 Toxin, HT-2 Toxin, Neosolaniol, Monoacetoxyscirpenol, Diacetoxyscirpenol, 15-Acetoxyscirpendiol, Fusarenon, T-2 Tetraol und Verrucarol.

5. Verwendung nach einem der vorhergehenden Ansprüche, wobei die Pflanzen ausgewählt sind unter Getreide, Kartoffel, Zuckerrübe, Tomate, Erbse, Lauch, Spargel, Futtergräser und Futterklee.

6. Verwendung nach Anspruch 5, wobei die Pflanzen ausgewählt sind unter Weizen, Gerste, Roggen, Triticale, Hafer, Reis und Mais.

7. Verwendung nach einem der vorhergehenden Ansprüche, wobei man die Alkalimetall- oder Erdalkalimetallsalze von Verbindungen der Formel (I), worin R¹ für H steht, einsetzt.

8. Verwendung nach Anspruch 7, wobei R² für Ethyl steht.

9. Verwendung nach einem der Ansprüche 7 oder 8, wobei es sich um das Calciumsalz handelt.

10. Verwendung nach einem der Ansprüche 1 bis 6, wobei in Verbindungen der Formel (I) R¹ für Ethyl und R² für Cyclopropyl steht.

11. Verfahren zur Verringerung oder Verhinderung der Kontamination von Pflanzen oder Pflanzenprodukten mit Mykotoxinen, die von Trichothecen-produzierenden Pilzen gebildet werden, bei dem man Pflanzen, Pflanzenteile davon oder Pflanzenprodukte mit wenigstens einer Verbindung der Formel I, die wie in einem der vorhergehenden Ansprüche definiert ist, behandelt.

## Claims

1. The use of compounds selected from the group consisting of
(a) acylcyclohexanediones of the formula (I) 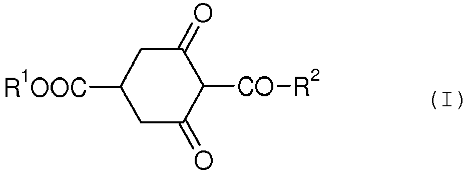 in which
R¹ is H or C₁-C₁₀-alkyl and
R² is C₁-C₁₀-alkyl or C₃-C₁₀-cycloalkyl
or salts thereof;
for reducing or preventing the contamination of plants or plant products with toxins formed by trichothecene-producing fungi.

2. The use according to claim 1, where the trichothecene-producing fungi are those of the genera Fusarium, Trichoderma or Stachybotrys.

3. The use according to either of the preceding claims, where the toxins are trichothecenes or zearalenone.

4. The use according to claim 3, where the trichothecenes are selected from the group consisting of deoxynivalenol, nivalenol, 3- and 15-acetoxynivalenol, T-2 toxin, HT-2 toxin, neosolaniol, monoacetoxyscirpenol, diacetoxyscirpenol, 15-acetoxyscirpendiol, fusarenone, T-2 tetraol and verrucarol.

5. The use according to any of the preceding claims where the plants are selected from the group consisting of cereal, potato, sugar beet, tomato, pea, leek, asparagus, fodder grasses and fodder clover.

6. The use according to claim 5, where the plants are selected from the group consisting of wheat, barley, rye, triticale, oats, rice and corn.

7. The use according to any of the preceding claims, where the alkali metal or alkaline earth metal salts of compounds of the formula (I) where R¹ is H are used.

8. The use according to claim 7, where R² is ethyl.

9. The use according to either of claims 7 or 8, where the calcium salt is used.

10. The use according to any of claims 1 to 6, where in compounds of the formula (I) R¹ is ethyl and R² is cyclopropyl.

11. A method for reducing or preventing the contamination of plants or plant products with mycotoxins formed by trichothecene-producing fungi, which comprises treating plants, plant parts thereof or plant products with at least one compound of the formula I as defined in any of the preceding claims.

## Revendications

1. Utilisation de composés qui sont choisis parmi :
(a) des acylcyclohexanediones de formule (I) 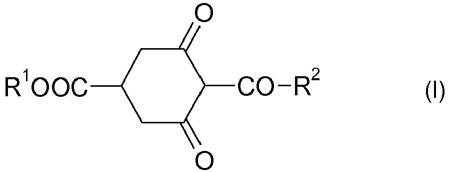 dans laquelle
R¹ représente H ou C₁-C₁₀-alkyle et
R² représente C₁-C₁₀-alkyle ou C₃-C₁₀-cycloalkyle, ou leurs sels ;
pour diminuer ou empêcher la contamination de plantes ou de produits végétaux par des toxines formées par des champignons produisant des trichothécènes.

2. Utilisation selon la revendication 1, les champignons produisant des trichothécènes étant ceux des espèces Fusarium, Trichoderma ou Stachybotrys.

3. Utilisation selon l'une quelconque des revendications précédentes, les toxines étant des trichothécènes ou la zéaralénone.

4. Utilisation selon la revendication 3, les trichothécènes étant choisis parmi le déoxynivalénol, le nivalénol, le 3-acétoxynivalénol et le 15-acétoxynivalénol, la toxine T-2, la toxine HT-2, le néosolaniol, le monoacétoxyscirpénol, le diacétoxyscirpénol, le 15-acétoxyscirpènediol, la fusarénone, le tétraol T-2 ou le verrucarol.

5. Utilisation selon l'une quelconque des revendications précédentes, les plantes étant choisies parmi les céréales, les pommes de terre, la betterave sucrière, les tomates, les pois, les poireaux, les asperges, les graminées fourragères et le trèfle fourrager.

6. Utilisation selon la revendication 5, les plantes étant choisies parmi le blé, l'orge, le seigle, le triticale, l'avoine, le riz et le maïs.

7. Utilisation selon l'une quelconque des revendications précédentes, les sels de métal alcalin ou de métal alcalino-terreux de composés de formule (I), dans laquelle R¹ représente H, étant utilisés.

8. Utilisation selon la revendication 7, R² représentant éthyle.

9. Utilisation selon l'une quelconque des revendications 7 à 8, où il s'agit du sel de calcium.

10. Utilisation selon l'une quelconque des revendications 1 à 6, R¹ représentant éthyle et R² représentant cyclopropyle dans les composés de formule (I).

11. Procédé pour diminuer ou empêcher la contamination de plantes ou de produits végétaux par des mycotoxines, qui sont formées par des champignons produisant des trichothécènes, dans lequel on traite des plantes, des parties de plantes ou des produits végétaux par au moins un composé de formule I, tel que défini dans l'une quelconque des revendications précédentes.
